# EUROPÄISCHE PATENTANMELDUNG

(11) **EP 4 339 028 A1**
(43) Veröffentlichungstag der Anmeldung: **20.03.2024**
(21) Anmeldenummer: 23192295.6
(22) Anmeldetag: 19.08.2023
(51) Int. Cl.: B60R 3/00, B62D 33/027

(54) **FREIZEITFAHRZEUGS UND ANORDNUNG MIT EINER HECKKLAPPE**

(30) Priorität: 19.08.2022 DE 102022121086
(71) Anmelder: Hymer GmbH & Co. KG, 88339 Bad Waldsee (DE)
(72) Erfinder: MATHIAS, Christian, 88427 Bad Schussenried (DE)
(74) Vertreter: Müller Schupfner & Partner Patent- und Rechtsanwaltspartnerschaft mbB

(57) **Zusammenfassung**

Anordnung (2) für Freizeitfahrzeuge (1), insbesondere für Wohnmobile oder Wohnwagen, mit einer Heckklappe (3). Vorgeschlagen wird, dass eine Heckklappenleiter (4) vorgesehen ist, dass die Heckklappe (3) ein Staufach (5) aufweist und dass die Heckklappenleiter (4) zumindest im Wesentlich in dem Staufach (5) unterbringbar ist. Ferner ist ein Freizeitfahrzeug (1) mit solch einer Anordnung (2) bekannt.

## Beschreibung

Die Erfindung betrifft ein Freizeitfahrzeug mit einer Anordnung, die eine Heckklappe umfasst. Insbesondere betrifft die Erfindung das Gebiet der Freizeitfahrzeuge, die als Wohnmobil oder Wohnwagen ausgestaltet sind.

Aus der DE 10 2004 013 184 A1 ist ein Freizeitfahrzeug mit einer Heckklappe und einem Fahrzeugheckklappendämpfer bekannt. Aus einer vertikalen Stellung kann die Heckklappe um etwa 90° nach unten geklappt werden.

Aufgabe der Erfindung ist es, eine Anordnung für ein Freizeitfahrzeug, insbesondere für ein Wohnmobil oder einen Wohnwagen, und ein Freizeitfahrzeug mit einer Anordnung anzugeben, die verbessert ausgestaltet sind.

Die Aufgabe wird durch eine Anordnung mit den Merkmalen des unabhängigen Patentanspruchs 1 und durch ein Freizeitfahrzeug mit den Merkmalen des Patentanspruchs 10 gelöst. Vorteilhafte Weiterbildung der Erfindung sind in den Unteransprüchen angegeben.

Die Aufgabe wird durch eine Anordnung für Freizeitfahrzeuge, insbesondere für Wohnmobile oder Wohnwagen, mit einer Heckklappe gelöst, wobei eine Heckklappenleiter vorgesehen ist, wobei die Heckklappe ein Staufach aufweist und wobei die Heckklappenleiter zumindest im Wesentlich in dem Staufach unterbringbar ist.

Ferner wird die Aufgabe durch ein Freizeitfahrzeug, insbesondere einen Wohnwagen oder ein Wohnmobil, mit solch einer Anordnung gelöst.

Vorteilhaft ist es, dass an der Heckklappe ein Auszugsmechanismus ausgebildet ist, mittels dem die Heckklappenleiter aus dem Staufach herausziehbar und in das Staufach einschiebbar ist. Dadurch kann eine vorteilhafte Führung der Heckklappenleiter erzielt werden. Außerdem ermöglicht dies gegebenenfalls eine Befestigung der Heckklappenleiter an dem Auszugsmechanismus, um die Heckklappenleiter in vorteilhafter Weise an der Heckklappe zu befestigen.

Vorteilhaft ist es, dass die Heckklappenleiter in einem aus dem Staufach gezogenen Zustand im Bereich einer Öffnung des Staufachs schwenkbar gelagert ist. Hierdurch kann die Heckklappenleiter nach unten geklappt werden, so dass die Heckklappenleiter dann am Boden abgestützt ist, wobei über die schwenkbare Lagerung eine hohe Stabilität der Leiter erzielt ist. Dadurch können Leitersprossen der Heckklappenleiter sicher und komfortabel als Trittstufen genutzt werden.

Vorteilhaft ist es, dass zumindest eine Befestigungseinrichtung vorgesehen ist, mit der die Heckklappenleiter mit der Heckklappe verbunden ist. Dies gewährleistet eine sichere Benutzung. Außerdem kann ein Verlust der Heckklappenleiter verhindert werden.

Vorteilhaft ist es, dass die zumindest eine Befestigungseinrichtung so ausgestaltet ist, dass die Heckklappenleiter zumindest bei einer vorgesehenen Benutzung der Heckklappenleiter von einem Nutzer des Freizeitfahrzeugs stets mit der Heckklappe verbunden ist. Dadurch wird stets eine sichere Benutzung gewährleistet. Dieses Ausgestaltung schließt aber nicht notwendigerweise aus, dass die Heckklappenleiter beispielsweise mit einem geeigneten Werkzeug demontiert werden kann.

Vorteilhaft ist es, dass die zumindest eine Befestigungseinrichtung so ausgestaltet ist, dass die Heckklappenleiter zumindest bei einer vorgesehenen Benutzung der Heckklappenleiter von einem Nutzer des Freizeitfahrzeugs lösbar mit der Heckklappe verbunden ist und/oder an der Befestigungseinrichtung einhängbar ist. Dadurch kann die Heckklappenleiter auch für andere Zwecke genutzt werden.

Vorteilhaft ist es, dass an einer Öffnung des Staufachs Bürsten, insbesondere Stoffbürsten, vorgesehen sind und dass die Bürsten so ausgestaltet sind, dass die Bürsten beim Einschieben der Heckklappenleiter in das Staufach zumindest an einer Seite über die Heckklappenleiter, insbesondere über Stufen der Heckklappenleiter, bürsten. Hierdurch wird eine Selbstreinigung ermöglicht.

Vorteilhaft ist es, dass die Bürsten einer erste Bürstenanordnung an der Öffnung des Staufachs und die Bürsten einer zweiten Bürstenanordnung an der Öffnung des Staufachs einander zugewandt sind. Hierdurch wird eine Reinigungswirkung verbessert.

Vorteilhaft ist es, dass eine Öffnung des Staufachs seitlich an der Heckklappe angeordnet ist. Dadurch kann ein vorteilhaftes Auf- und Absteigen auf beziehungsweise von der Heckklappe erfolgen. Ferner kann hierdurch das Staufach in Querrichtung ausgeführt werden, was die Unterbringung einer ausreichend langen Heckklappenleiter, die bis zum Boden oder dergleichen reicht, ermöglicht, auch wenn die Heckklappe in Fahrzeuglängsrichtung relativ kurz ist.

Vorteilhaft ist es, dass die Heckklappenleiter vollständig in dem Staufach unterbringbar ist. Hierdurch wird ein Hochklappen der Heckklappe in verbesserter Weise gewährleistet.

Vorteilhaft ist es, dass zumindest ein Zugmittel, insbesondere ein mit der Heckklappenleiter verbundenes Zugmittel, vorgesehen ist, mittels dem die Heckklappenleiter aus dem Staufach herausziehbar ist. Hierdurch ist eine intuitive Bedienung möglich.

Weitere Vorteile und Einzelheiten der Erfindung werden anhand der in den schematischen Figuren dargestellten Ausführungsbeispielen näher erläutert.

Hierbei zeigen:
- Fig. 1: ein Freizeitfahrzeug mit einer Anordnung entsprechend einem Ausführungsbeispiel in einer räumlichen Darstellung, wobei eine Ansicht von schräg hinten dargestellt ist;
- Fig. 2: eine auszugsweise, räumliche Darstellung des Freizeitfahrzeugs mit der Anordnung, wobei eine Heckklappe und eine Heckklappenleiter dargestellt sind;
- Fig. 3: eine auszugsweise, räumliche Darstellung des in Fig. 2 dargestellten Freizeitfahrzeugs mit der Anordnung, wobei die Heckklappe und die Heckklappenleiter im teilweise eingeschobenen Zustand dargestellt sind;
- Fig. 4: eine auszugsweise, räumliche Darstellung des Freizeitfahrzeugs mit der Anordnung, wobei die Heckklappe und die Heckklappenleiter im vollständig eingeschobenen Zustand dargestellt sind; und
- Fig. 5: eine auszugsweise, räumliche Darstellung des Freizeitfahrzeugs mit der Anordnung, wobei die Heckklappe geschlossen ist.

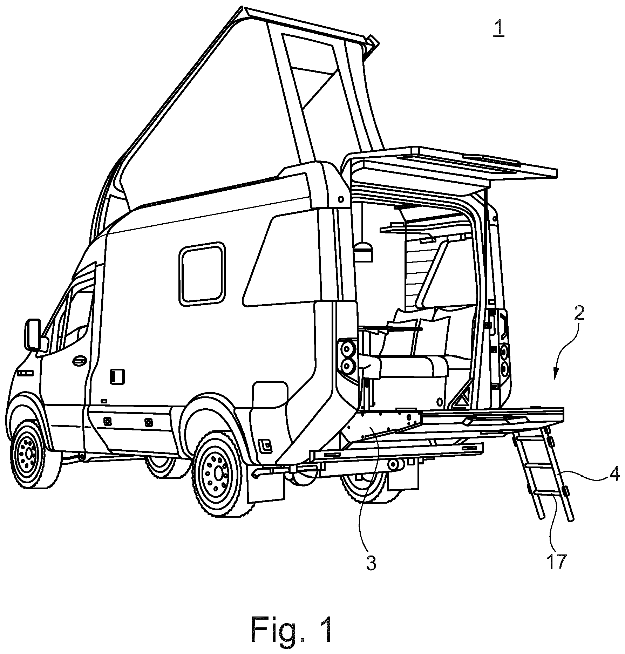

Fig. 1 zeigt ein Freizeitfahrzeug 1 mit einer Anordnung 2 entsprechend einem Ausführungsbeispiel in einer räumlichen Darstellung, wobei eine Ansicht von schräg hinten dargestellt ist. Das Freizeitfahrzeuge 1 kann insbesondere als Wohnmobil oder Wohnwagen ausgebildet sein. Die Anordnung 2 eignet sich besonders für solche Freizeitfahrzeuge 1.

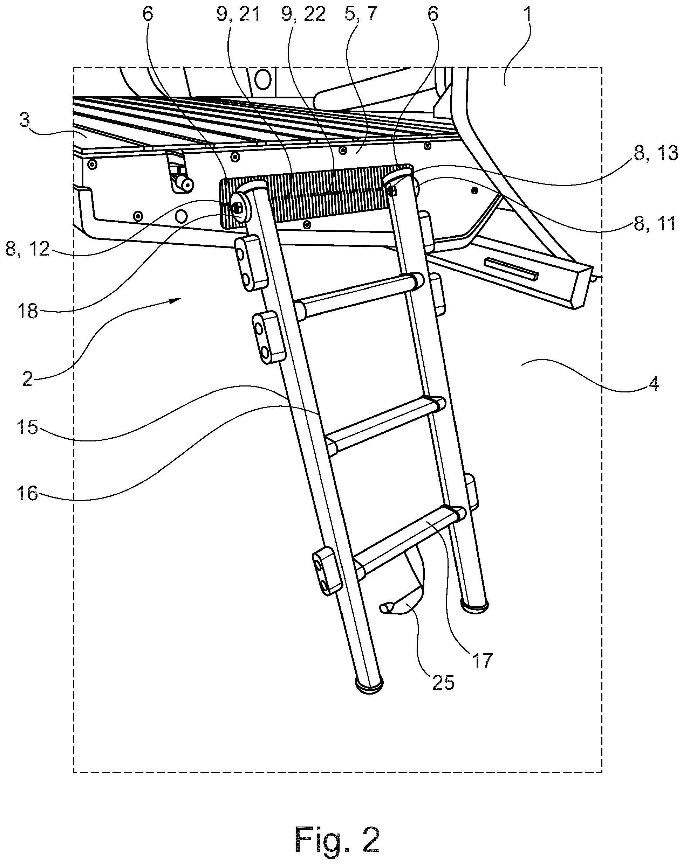

Die Anordnung 2 weist eine Heckklappe 3 und eine Heckklappenleiter 4 auf. Die Heckklappe 3 ist in Fig. 1 und auch den Fig. 2 bis 4 um etwa 90° heruntergeklappt. Die Heckklappenleiter 4 steht seitlich neben der Heckklappe 3 und ermöglicht ein Heruntersteigen und ein Hinaufsteigen auf die Heckklappe 3.

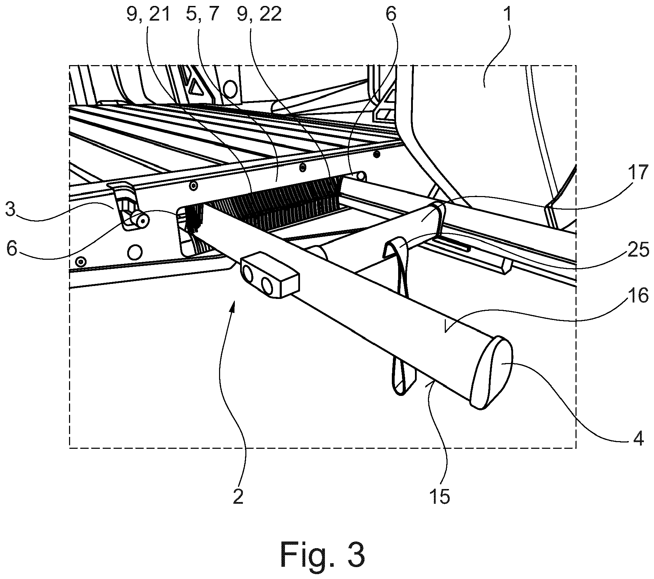

Fig. 2 zeigt eine auszugsweise, räumliche Darstellung des Freizeitfahrzeugs 1 mit der Anordnung 2, wobei die Heckklappe 3 und die Heckklappenleiter 4 auf der Seite der Heckklappenleiter 4 dargestellt sind. Die Heckklappe 3 weist ein Staufach 5 auf, das in diesem Ausführungsbeispiel auf der rechten Fahrzeugseite vorgesehen ist. Bei einer abgewandelten Ausgestaltung kann das Staufach 5 auch auf der linken Fahrzeugseite vorgesehen sein. Ferner kann das Staufach 5 auf der Fahrerseite oder auf der Beifahrerseite vorgesehen sein. Die Heckklappenleiter 4 ist in dem Staufach 5 unterbringbar, wie es auch anhand Fig. 3 bis 5 erläutert ist.

An der Heckklappe 3 ist ein Auszugsmechanismus 6 vorgesehen. Mit dem Auszugsmechanismus kann die Heckklappenleiter 4 aus dem dem Staufach 5 herausgezogen werden. Ferner kann die Heckklappenleiter 4 in das Staufach 5 eingeschoben werden.

In diesem Ausführungsbeispiel ist die ausgezogene Heckklappenleiter 4 an der Öffnung 7 des Staufachs 5 schwenkbar gelagert. Hierfür ist eine Befestigungseinrichtung 8 vorgesehen, durch die die Heckklappenleiter 4 mit der Heckklappe 3 verbunden ist. Die Befestigungseinrichtung weist in diesem Ausführungsbeispiel Lager 10, 11, die als Lagerlaschen 10, 11 ausgebildet sind, und Befestigungsbolzen 12, 13 auf.

Hierbei ist die Befestigungseinrichtung 8 so ausgestaltet ist, dass die Heckklappenleiter 4 stets mit der Heckklappe 3 verbunden ist. Dies betrifft die gewöhnliche Nutzung. Allerdings kann mittels eines Werkzeugs dennoch eine Demontage möglich sein.

Es ist auch eine abgewandelte Ausgestaltung möglich, bei der die Befestigungseinrichtung 8 so ausgestaltet ist, dass die Heckklappenleiter 4 lösbar mit der Heckklappe 3 verbunden ist. Hierbei ist es bevorzugt, dass die Heckklappenleiter 4 von einem Benutzer an der Befestigungseinrichtung 8 eingehängt werden kann.

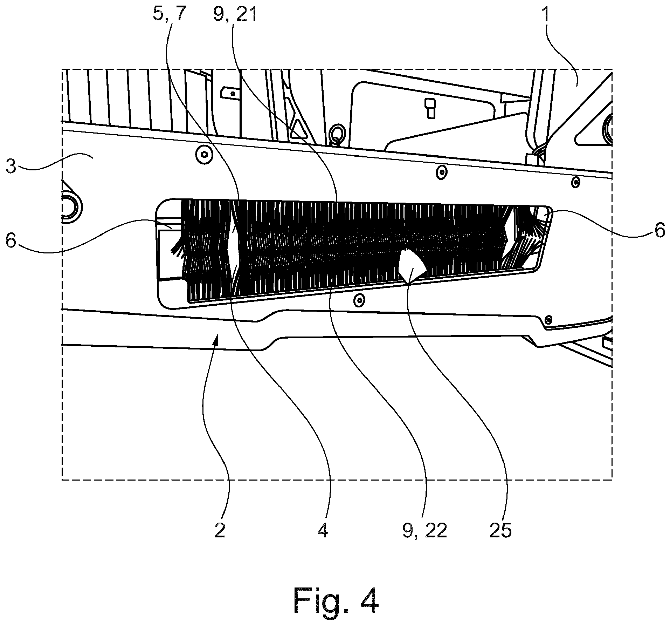

Im folgenden sind das Freizeitfahrzeug 1 und die Anordnung 2 auch unter Bezugnahme auf die Fig. 3 und 4 weiter beschrieben. Fig. 3 zeigt eine auszugsweise, räumliche Darstellung des in Fig. 2 dargestellten Freizeitfahrzeugs 1 mit der Anordnung 2, wobei die Heckklappe 3 und die Heckklappenleiter 4 im teilweise eingeschobenen Zustand dargestellt sind. Fig. 4 zeigt eine auszugsweise, räumliche Darstellung des Freizeitfahrzeugs 1 mit der Anordnung 2, wobei die Heckklappe 3 und die Heckklappenleiter 4 im vollständig eingeschobenen Zustand dargestellt sind.

Ausgehend von dem in Fig. 2 dargestellten Zustand kann die Heckklappenleiter 3 hochgeklappt und, wie es in Fig. 3 dargestellt ist, in das Staufach 5 eingeschoben werden. Fig. 4 zeigt dann den eingeschobenen Zustand. Die Öffnung 7 des Staufachs 5 ist seitlich an der Heckklappe 3 angeordnet.

Wenn die Heckklappe 3 heruntergeklappt wird, dann kann die Heckklappenleiter 4 aus der in Fig. 4 gezeigten eingeschobenen Stellung über ein Zugmittel 25 aus dem Staufach 5 gezogen werden. Das Zugmittel 25 ist mit der Heckklappenleiter 4 verbunden.

An der Öffnung 7 des Staufachs 5 sind Bürsten 9, insbesondere Stoffbürsten, vorgesehen. Die Bürsten 9 bürsten beim Einschieben der Heckklappenleiter 4 in das Staufach 5 an den Seiten 15, 16 über die Heckklappenleiter 4. Speziell werden hierbei Stufen 17 der Heckklappenleiter 4 gebürstet, wobei zur Vereinfachung der Darstellung exemplarisch die Stufe 17 gekennzeichnet ist.

Die Bürsten 9 sind hierfür in einer ersten Bürstenanordnung 21 und einer zweiten Bürstenanordnung 22 angeordnet, die sich beide an der Öffnung 7 des Staufachs 5 befinden. Die Bürsten 9 der ersten Bürstenanordnung 21 und die Bürsten 9 der zweiten Bürstenanordnung 22 sind einander zugewandt. Dadurch ergibt sich eine besonders vorteilhafte Reinigungswirkung beim Einschieben der Heckklappenleiter 4 in das Staufach 5.

Wie in Fig. 4 dargestellt ist, bilden die Bürsten der Bürstenanordnungen 21 22 im eingeschobenen Zustand der Heckklappenleiter 4 außerdem einen flexiblen Verschluss für die Öffnung 7. Dadurch sind ein optischer Abschluss, insbesondere in einer der Farbe der Heckklappe 3 vergleichbaren Farbe, und ein Schutz gegenüber der Umwelt, beispielsweise gegen das Einwehen von Blättern oder Schnee in das Staufach 5 bei geöffneter Heckklappe 3, gegeben.

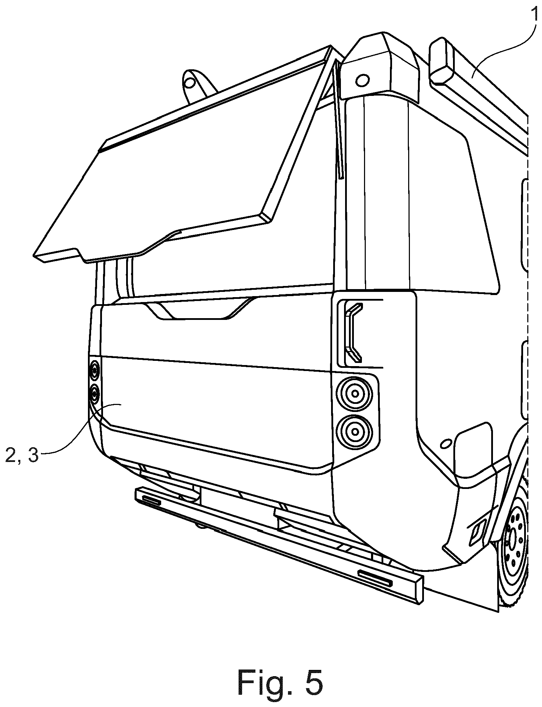

Fig. 5 zeigt eine auszugsweise, räumliche Darstellung des Freizeitfahrzeugs 1 mit der Anordnung 2, wobei die Heckklappe 3 geschlossen ist. Die Heckklappenleiter 4 ist im eingeschobenen Zustand vollständig in dem Staufach 5 untergebracht. Dadurch kann die Heckklappe zuverlässig nach oben geklappt werden.

Die Erfindung ist nicht auf die beschriebenen Ausführungsformen beschränkt.

## Patentansprüche

1. Anordnung (2) für Freizeitfahrzeuge (1), insbesondere für Wohnmobile oder Wohnwagen, mit einer Heckklappe (3),
**dadurch gekennzeichnet,**
**dass** eine Heckklappenleiter (4) vorgesehen ist, dass die Heckklappe (3) ein Staufach (5) aufweist und dass die Heckklappenleiter (4) zumindest im Wesentlich in dem Staufach (5) unterbringbar ist.

2. Anordnung nach Anspruch 1,
**dadurch gekennzeichnet,**
**dass** an der Heckklappe (3) ein Auszugsmechanismus (6) ausgebildet ist, mittels dem die Heckklappenleiter (4) aus dem Staufach (5) herausziehbar und in das Staufach (5) einschiebbar ist.

3. Anordnung nach Anspruch 1 oder 2,
**dadurch gekennzeichnet,**
**dass** die Heckklappenleiter (4) in einem aus dem Staufach (5) gezogenen Zustand im Bereich einer Öffnung (7) des Staufachs (5) schwenkbar gelagert ist.

4. Anordnung nach einem der Ansprüche 1 bis 3,
**dadurch gekennzeichnet,**
**dass** zumindest eine Befestigungseinrichtung (8) vorgesehen ist, mit der die Heckklappenleiter (4) mit der Heckklappe (3) verbunden ist.

5. Anordnung nach Anspruch 4,
**dadurch gekennzeichnet,**
**dass** die zumindest eine Befestigungseinrichtung (8) so ausgestaltet ist, dass die Heckklappenleiter (4) zumindest bei einer vorgesehenen Benutzung der Heckklappenleiter (4) von einem Nutzer des Freizeitfahrzeugs (1) stets mit der Heckklappe (3) verbunden ist.

6. Anordnung nach Anspruch 4,
**dadurch gekennzeichnet,**
**dass** die zumindest eine Befestigungseinrichtung (8) so ausgestaltet ist, dass die Heckklappenleiter (4) zumindest bei einer vorgesehenen Benutzung der Heckklappenleiter (4) von einem Nutzer des Freizeitfahrzeugs (1) lösbar mit der Heckklappe (3) verbunden ist und/oder an der Befestigungseinrichtung (8) einhängbar ist.

7. Anordnung nach einem der Ansprüche 1 bis 6,
**dadurch gekennzeichnet,**
**dass** an einer Öffnung (7) des Staufachs (5) Bürsten (9), insbesondere Stoffbürsten, vorgesehen sind und dass die Bürsten (9) so ausgestaltet sind, dass die Bürsten (9) beim Einschieben der Heckklappenleiter (4) in das Staufach (5) zumindest an einer Seite (15, 16) über die Heckklappenleiter (4), insbesondere über Stufen (17) der Heckklappenleiter (4), bürsten.

8. Anordnung nach Anspruch 7,
**dadurch gekennzeichnet,**
**dass** die Bürsten (9) einer erste Bürstenanordnung (21) an der Öffnung (7) des Staufachs (5) und die Bürsten (9) einer zweiten Bürstenanordnung (22) an der Öffnung (7) des Staufachs (5) einander zugewandt sind.

9. Anordnung nach einem der Ansprüche 1 bis 8,
**dadurch gekennzeichnet,**
**dass** eine Öffnung (7) des Staufachs (5) seitlich an der Heckklappe (3) angeordnet ist und/oder dass die Heckklappenleiter (4) vollständig in dem Staufach (5) unterbringbar ist und/oder dass zumindest ein Zugmittel (25), insbesondere ein mit der Heckklappenleiter (4) verbundenes Zugmittel (25), vorgesehen ist, mittels dem die Heckklappenleiter (4) aus dem Staufach (5) herausziehbar ist.

10. Freizeitfahrzeug (1), insbesondere Wohnmobil oder Wohnwagen, mit einer Anordnung (2) nach einem der Ansprüche 1 bis 9.
